# EUROPÄISCHE PATENTSCHRIFT

(11) **EP 0 695 721 B1**
(45) Veröffentlichungstag und Bekanntmachung des Hinweises auf die Patenterteilung: **13.10.1999**
(21) Anmeldenummer: 95111364.6
(22) Anmeldetag: 20.07.1995
(51) Int. Cl.: C02F 3/10, C02F 1/28

(54) **Füllmaterial**
Contact material
Matériau du lit de contact

(30) Priorität: 04.08.1994 DE 4427576
(43) Veröffentlichungstag der Anmeldung: 07.02.1996
(73) Patentinhaber: Norddeutsche Seekabelwerke GmbH, 26954 Nordenham (DE)
(72) Erfinder: Basse, Hartwig, D-26954 Nordenham (DE); Kruse, Hans-Dieter, D-26937 Stadland (DE)
(74) Vertreter: Möller, Friedrich, Dipl.-Ing.

(56) Entgegenhaltungen:
- EP-A- 0 508 223

## Beschreibung

Die Erfindung betrifft ein Füllmaterial, insbesondere zur biologischen Abwasserreinigung, gemäß dem Oberbegriff des Anspruchs 1.

Im Sinne der Erfindung sollen unter Füllmaterial beispielsweise Füllkörper aus rohrförmigen Grundkörpern mit netzartig strukturierter Mantelfläche sowie Füllkörperblöcke aus mehreren miteinander verbundenen Füllkörpern verstanden werden. Das Füllmaterial besteht vorzugsweise vollständig aus Kunststoff. Es kann aber auch ganz oder teilweise aus einem anderen Material bestehen. Die Abmessungen des Füllmaterials können beliebig sein.

Füllmaterialien der hier angesprochenen Art finden hauptsächlich dort Anwendung, wo es um die Verbesserung des Stoffaustausches zwischen Fluiden, also Gasen und/oder Flüssigkeiten, geht. Beispielsweise kommen die Füllmaterialien bei der Absorption, Desorption, Destillation, Rektifikation, Extraktion, Befeuchtung und Kondensation zur Anwendung. Besonders bewährt haben sich derartige Füllmaterialien im Bereich der biologischen Abwasserreinigung, wo sie als Füllkörper in regellosen Schüttungen sowie als geordnete Füllkörperpakete zur Bildung von zum Beispiel getauchten Festbetten zum Einsatz kommen. Hierbei dient das Füllmaterial als Träger für die zur biologischen Behandlung erforderlichen Bakterien, nämlich eines sogenannten biologischen Rasens. Die Leistungsfähigkeit einer mit derartigem Füllmaterial bestückten Anlage zur Abwasserreinigung hängt von mehreren Faktoren ab. Einerseits soll das Füllmaterial eine möglichst große spezifische Bewuchsfläche bieten, andererseits ist ein möglichst guter Halt der Bakterien auf dem Füllmaterial erforderlich. Schließlich soll der biologische Rasen auf dem Füllmaterial ungehindert von der zu behandelnden Flüssigkeit umströmt bzw. benetzt werden können.

Bekannt ist aus der EP-A-0 508 223 ein als Rieseleinbau-Element für Kühltürme dienendes Füllmaterial, das aus rohrförmigen Grundkörpern mit netzartig strukturierter Mantelfläche gebildet ist. Dieses Füllmaterial hat den Nachteil, daß die Mantelflächen der Grundkörper eine nur geringe Oberfläche aufweisen. Diese geringe Oberfläche bietet vielfach keine ausreichende Bewuchsfläche für biologischen Rasen. Beim Einsatz dieses bekannten Füllmaterials in Abwasserbehandlungs-Anlagen ist die Wirksamkeit derselben deshalb begrenzt.

Aus "Römpps Chemie Lexikon" "(Seite 1454) sind zur Bildung von Füllmaterial dienende Füllkörper mit der Bezeichnung "TOP-PAK" und "Hacketten" bekannt. Ausgehend von diesem Stand der Technik liegt der vorliegenden Erfindung das Problem zugrunde, ein wirksames und einfach herzustellendes Füllmaterial zu schaffen.

Zur Lösung dieses Problems weist das erfindungsgemäße Füllmaterial die Merkmale des Anspruchs 1 auf. Durch die Anordnung mindestens eines streifenförmig ausgebildeten, oberflächenvergrößernden Elements auf der Außenfläche der Mantelfläche des Grundkörpers wird die für den biologischen Rasen zur Verfügung stehende spezifische Bewuchsfläche erhöht. Die Wirksamkeit des Füllmaterials wird dadurch wesentlich gesteigert.

Vorzugsweise ist das oder jedes streifenförmig ausgebildete Element spiralförmig von außen um die Mantelfläche des oder jedes Grundkörpers herum angeordnet. Eine derartige Ausgestaltung des Füllmaterials erlaubt eine besonders einfache Fertigung desselben. Es ist aber auch möglich, das oder jedes Element ringförmig um die Grundkörper herum anzuordnen und/oder die Elemente in Längsrichtung der Grundkörper verlaufend auf denselben anzuordnen.

Die streifenförmigen oberflächenvergrößernden Elemente sind erfindungsgemäß aus einer Folie gebildet. Diese streifenförmige Folie verfügt über eine relativ große Oberfläche bei geringem Gewicht. Außerdem werden die Abmessungen der Füllkörper durch die außen auf der Mantelfläche der Grundkörper aufgebrachte streifenförmige Folie nicht oder nur unwesentlich vergrößert.

Die Folie ist beim bevorzugten Ausführungsbeispiel der Erfindung mindestens wasserundurchlässig, vorzugsweise wasser- und luftundurchlässig, ausgebildet. Auf diese Weise kann kein Stoffaustausch durch die streifenförmige Folie der oberflächenvergrößernden Elemente hindurch stattfinden. Die zu behandelnden Stoffe müssen vielmehr an der Oberfläche der streifenförmigen Folie entlangströmen. Um hierbei die Strömungswiderstände so gering wie möglich zu halten, ist nach einem weiteren Vorschlag der Erfindung die Folie glatt ausgebildet. Glatt bedeutet in diesem Zusammenhang, daß die Oberfläche der streifenförmigen Folie eine zum sicheren Halt des darauf anzusiedelnden biologischen Rasens ausreichende Rauigkeit aufweist; diese Rauigkeit im strömungstechnischen Sinne keine oder keine nennenswerte Beeinträchtigung herbeiführt.

Nach einer bevorzugten Weiterbildung der Erfindung weist eine Oberfläche des oder jeden Elements Distanzglieder, insbesondere steg- oder noppenartige Abstandhalter, auf. Dies hat den Vorteil, daß sowohl bei regellosen Schüttungen von Füllkörpern als auch bei geordneten Füllkörperpaketen die Grundkörper derselben stets einen definierten Abstand voneinander aufweisen. Verklebungen der Grundkörper sowie benachbarter, oberflächenvergrößernder Elemente werden vermieden. Dadurch kann die zu behandelnde Flüssigkeit den biologischen Rasen ungehindert umströmen. Die Wirksamkeit des Füllmaterials wird nochmals gesteigert.

Die oberflächenvergrößernden Elemente, insbesondere die streifenförmigen Folien, sind unmittelbar mit der Außenseite der Mantelfläche jedes Grundkörpers verbunden. Es handelt sich hierbei um eine feste, dauerhafte und/oder unlösbare Verbindung der streifenförmigen Folie mit dem jeweiligen Grundkörper, die durch Schweißen, Siegeln und/oder Kleben zustandekommt, also unmittelbar erfolgt.

Vorzugsweise wird das oder jedes kalte oberflächenvergrößernde Element aus Kunststoff unmittelbar nach dem Extrudieren des ebenfalls aus Kunststoff bestehenden Grundkörpers auf den noch erhitzten Grundkörper angeordnet, wobei infolge dessen der Grundkörper sowie das oder jedes Element fest miteinander verbunden werden. Dadurch wird ein zusätzliches Erwärmen des Grundkörpers und/oder Elements zum gegenseitigen Verbinden derselben eingespart; das Herstellungsverfahren spart demzufolge Energie. Alternativ können die noch heißen Elemente mit kalten Grundkörpern verbunden sein oder sowohl die Grundkörper als auch die Elemente zur Verbindung heiß sein, nämlich noch Restwärme aus ihrem vorangegangenen Herstellungsprozeß aufweisen. Darüber hinaus können die Grundkörper und/oder die Elemente zusätzlich erwärmt sein oder nach ihrer vorhergehenden Abkühlung wieder aufgewärmt werden. In diesen Fällen können die Elemente in einem zusätzlichen Arbeitsgang auf die Grundkörper aufgebracht werden. Diese zusätzliche Erwärmung oder Neuerwärmung kann bei den Grundkörpern partiell erfolgen, nämlich dort wo die Elemente auf der Außenseite der Mantelfläche des jeweiligen Grundkörpers zur Anlage gelangen. Die Erwärmung des Grundkörpers erfolgt vorzugsweise nur außenseitig. Schließlich können die Elemente mit den Grundkörpern verklebt sein, und zwar vorzugsweise mittels eines Kontaktklebers.

Bevorzugte Weiterbildungen der Erfindung ergeben sich aus den Unteransprüchen und der Beschreibung.

Nachfolgend werden bevorzugte Ausführungsbeispiele der Erfindung anhand der Zeichnung näher erläutert. In der Zeichnung zeigen:
- Fig. 1: einen Füllkörper nach einem ersten Ausführungsbeispiel der Erfindung in Seitenansicht,
- Fig. 2: einen Füllkörper nach einem zweiten Ausführungsbeispiel der Erfindung in einer Ansicht analog zu Fig. 1,
- Fig. 3: einen Füllkörper nach einem dritten Ausführungsbeispiel der Erfindung in einer Ansicht analog zu Fig. 1 und 2,
- Fig. 4: einen Füllkörper nach einem weiteren Ausführungsbeispiel der Erfindung in einer Ansicht analog zu Fig. 1 bis 3

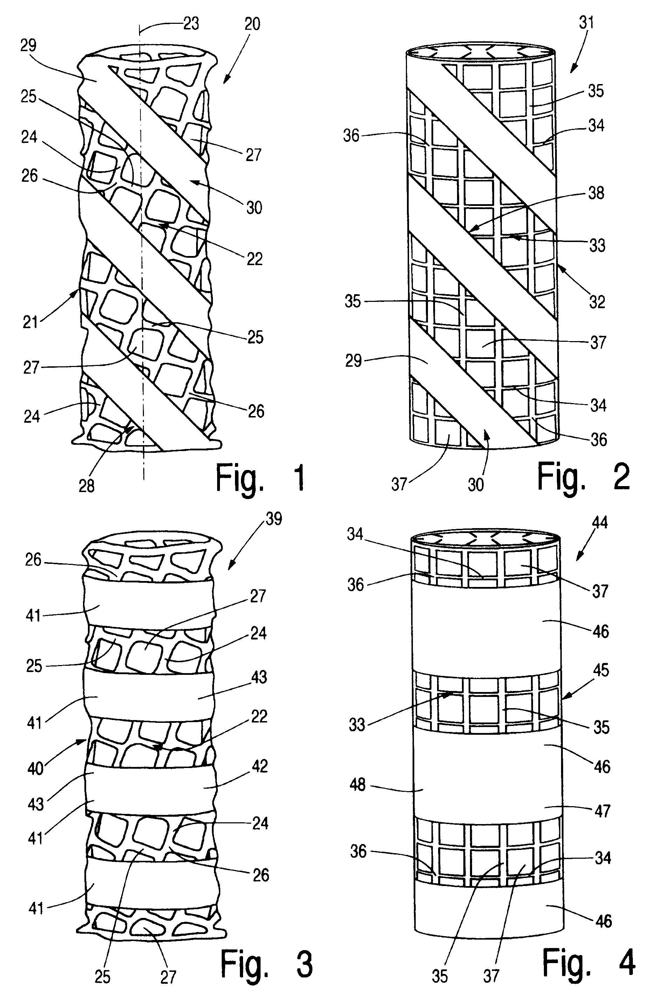

- Fig. 4: einen Füllkörper nach einem weiteren Ausführungsbeispiel der Erfindung nach einer Ansicht analog zu Fig. 1 bis 4,

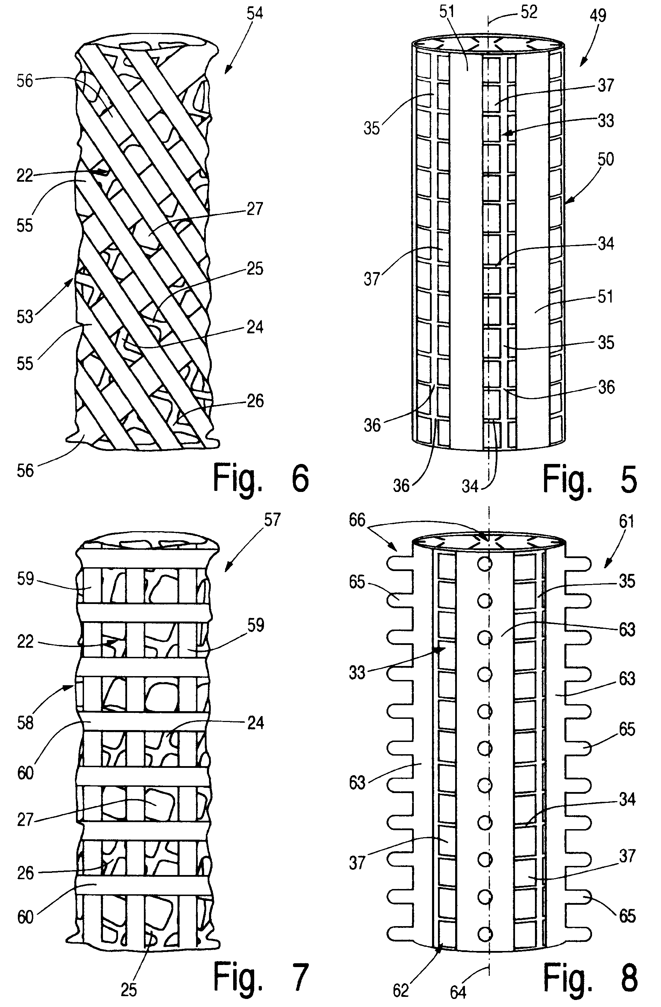

- Fig. 6: einen Füllkörper nach einem weiteren Ausführungsbeispiel der Erfindung nach einer Ansicht analog zu Fig. 1 bis 5,
- Fig. 7: einen Füllkörper nach einem weiteren Ausführungsbeispiel der Erfindung nach einer Ansicht analog zu Fig. 1 bis 6,
- Fig. 8: einen Füllkörper nach einem weiteren Ausführungsbeispiel der Erfindung in einer Ansicht analog zu Fig. 1 bis 7,

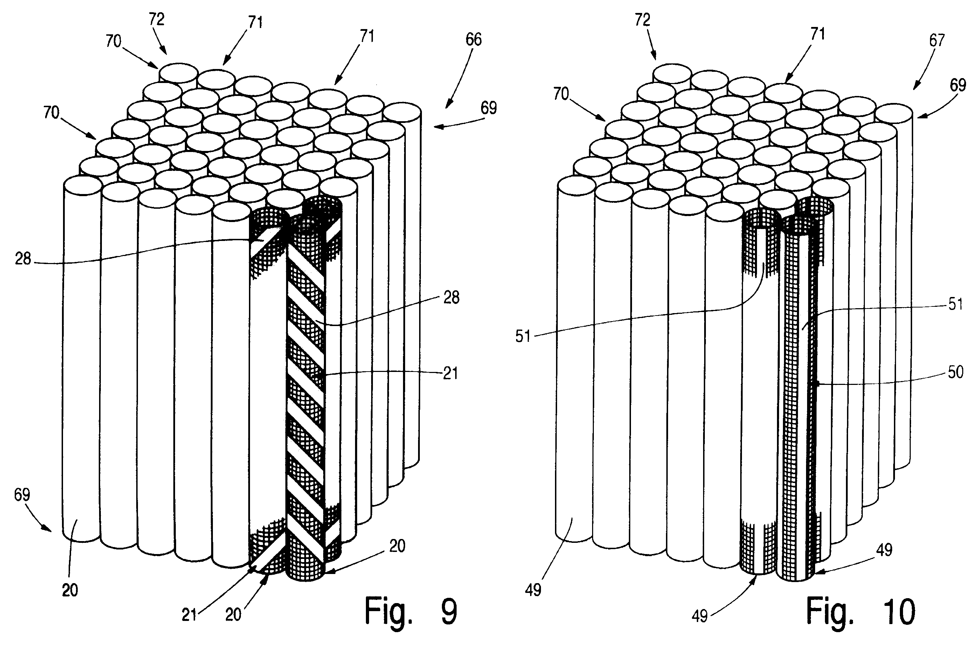

- Fig. 9: einen Füllkörperblock in einer schematisierten, perspektivischen Draufsicht,
- Fig. 10: ein zweites Ausführungsbeispiel eines Füllkörperblocks in einer Ansicht analog zu Fig. 9, und

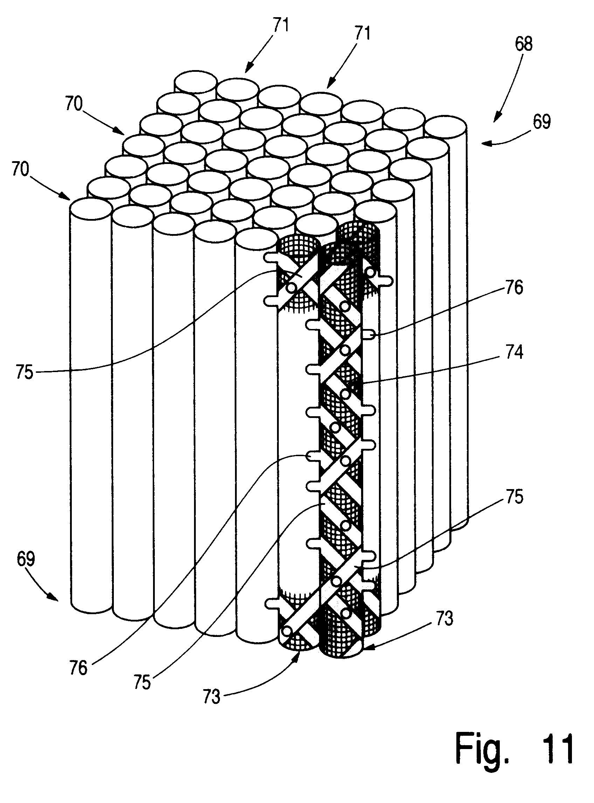

- Fig. 11: ein weiteres Ausführungsbeispiel eines Füllkörperblocks in einer Ansicht analog zu Fig. 9 und 10.

Die hier gezeigten Füllkörper sowie Füllkörperblöcke finden Verwendung bei der biologischen Abwasserreinigung. Die Füllkörper kommen in regellosen Schüttungen zum Einsatz, die geordneten Füllkörperblöcke werden zur Bildung von Tropfkörpern, Tauchtropfkörpern oder getauchten Festbetten verwendet. Hierzu sind sowohl Füllkörper als auch Füllkörperblöcke mit einer Biomasse, einem sogenannten biologischen Rasen, besiedelt.

Fig. 1 zeigt einen Füllkörper 20 mit einem rohrförmigen Grundkörper 21. Der Grundkörper 21 verfügt über eine netzartig strukturierte Mantelfläche 22. Diese netzartig strukturierte Mantelfläche 22 wird durch in Richtung einer Längsmittelachse 23 des Grundkörpers 21 wendelförmig verlaufende Stränge 24, 25 gebildet. Die Stränge 24, 25 verlaufen rechtwinklig zueinander, wobei die Stränge 25 so ausgebildet sind, daß sie nicht durchgehend verlaufen, sondern im Bereich von Knotenpunkten 26 gegeneinander versetzt miteinander verbunden sind. Die Stränge 24 hingegen sind durchgehend verlaufend ausgebildet. Die Stränge 24, 25 schließen Öffnungen 27 ein. Die Stränge 24, 25 bestimmen die Oberfläche der Mantelfläche 22 und demzufolge die spezifische Bewuchsfläche für die Biomasse. Zur Vergrößerung der spezifischen Bewuchsfläche ist auf der Mantelfläche 22 des Grundkörpers 21 ein oberflächenvergrößerndes Element 28 angeordnet. Das Element 28 ist als ein Streifen 29 ausgebildet, der spiralförmig um die Mantelfläche 22 des Grundkörpers 21 gewickelt ist. Der Streifen 29 überdeckt die Mantelfläche 22 des Grundkörpers 21 teilweise. Die Mantelfläche 22 des Grundkörpers 21 ist zu 20 % bis 80 %, vorzugsweise zu 50 %, vom Streifen 29 überdeckt.

Der Grundkörper 21 des Füllkörpers 20 besteht aus Kunststoff und wird durch Extrusion hergestellt. Ebenso besteht der Streifen 29 aus Kunststoff, der ebenfalls durch Extrusion hergestellt werden kann. Der Füllkörper 20 und der Streifen 29 können aus dem gleichen Kunststoff gebildet sein. Beim Kunststoff handelt es sich um einen solchen mit großer Temperaturbeständigkeit bei mindestens hohen, vozugsweise auch niedrigen Temperaturen. Dazu kommen Polyolefine, wie z. B. Hochdruckpolyethylen, Niederdruckpolyethylen, Polypropylen oder Polyvenylidenfluorid in Betracht. Die Streifen 29 und die Grundkörper 21 können sowohl aus dem gleichen als auch aus unterschiedlichen Kunststoffen gebildet sein.

Die Streifen 29 sind gebildet aus einer dünnen Kunststofffolie. Die Dicke der streifenförmigen Folie beträgt etwa 10 bis 300 µm. Vorzugsweise beträgt sie etwa 200µm. Die Breite der streifenförmigen Folie, also der Streifen 29, beträgt 10 bis 50mm, vorzugsweise etwa 30mm.

Die Streifen 29 sind aus einer Folie mit einer glatten Oberfläche gebildet. Des weiteren sind durch Verwendung einer entsprechenden Folie die Streifen 29 mindestens flüssigkeitsundurchlässig, vorzugsweise auch gasundurchlässig.

Unmittelbar nach dem Extrudieren des Grundkörpers 21 wird der Streifen 29 von außen auf den noch erhitzten Grundkörper 21 aufgebracht, vorzugsweise auf diesen aufgewikkelt. Infolge der hohen Temperatur des Grundkörpers 21 werden der Grundkörper 21 und der Steifen 29 miteinander unlösbar verbunden. Es handelt sich hierbei um eine unmittelbare, dauerhafte Verbindung des Streifens 29 mit dem Grundkörper 21. Durch die Bildung des Streifens 29 aus einer dünnen Folie reicht bereits eine geringe Restenergie im noch vom Extrudieren warmen Grundkörper 21 aus, um die dauerhafte, unlösbare Verbindung des Grundkörpers 21 mit dem Streifen 29 herzustellen. Hierbei erfolgt mindestens bereichsweise an den Berührungsstellen 29 des Streifens mit den Strängen 24, 25 der netzförmig strukturierten Mantelfläche 22 des Grundkörpers 21 eine Verschmelzung der Folie der Streifen 29 mit den Strängen 24, 25 des Grundkörpers 21, so daß nach dem Abkühlen des Grundkörpers 21 und des Streifens 29 beide miteinander durch Verschweißen oder Siegeln unmittelbar miteinander verbunden sind.

In Abänderung dieses Herstellungsverfahrens ist es ebenso denkbar, den noch heißen oder erhitzten Streifen 29 mit einem erkalteten oder noch warmen bzw. erhitzten Grundkörper 21 zu verbinden.

Einen Füllkörper 31 nach einem zweiten Ausführungsbeispiel der Erfindung zeigt Fig. 2. Der Füllkörper 31 besteht ebenfalls aus einem Grundkörper 32 mit netzartig strukturierter Mantelfläche 33. Die Mantelfläche 33 wird durch sich kreuzende Querstränge 34 und Längsstränge 35 gebildet. Längsstränge 35 und Querstränge 34 verlaufen durchgehend und kreuzen einander in Knotenpunkten 36. Querstränge 34 und Längsstränge 35 schließen Öffnungen 37 ein. Querstränge 34 und Längsstränge 35 bilden die Oberfläche der Mantelfläche 33 und damit die spezifische Bewuchsfläche für den biologischen Rasen. Zur Erhöhung der spezifischen Bewuchsfläche ist der Mantelfläche 33 des Grundkörpers 32 ein oberflächenvergrößerndes Element 38 zugeordnet. Das Element 38 ist analog zum Element 28 des Ausführungsbeispiels gemäß Fig. 1 aus einer streifenförmigen Folie ausgebildet und ebenfalls auf dem Grundkörper 33 außenseitig angeordnet. Demzufolge werden für das Element 38 gemäß Fig. 2 die gleichen Bezugsziffern verwendet wie für das Element 28 gemäß Fig. 1. Das Element 38 überdeckt die in seinem Bereich liegenden Öffnungen 37 und Querstränge 34 sowie Längsstränge 35 der Mantelfläche 33 von der Außenseite des Grundkörpers 32.

Nach einem weiteren Ausführungsbeispiel der Erfindung besteht ein Füllkörper 39 aus einem Grundkörper 40 sowie mehreren, nämlich vier, oberflächenvergrößernden Elementen 41 (Fig. 3). Der Grundkörper 40 des Füllkörpers 39 ist analog zum Grundkörper 21 des Füllkörpers 20 gemäß Fig. 1 ausgebildet. Demzufolge werden für den Grundkörper 40 die gleichen Bezugsziffern verwendet wie für den Grundkörper 21 gemäß Fig. 1. Zur Vergrößerung der spezifischen Bewuchsfläche für den biologischen Rasen sind auf der Mantelfläche 22 des Grundkörpers 40 die vier oberflächevergrößernden Elemente 41 angeordnet. Die Elemente 41 sind als Streifen 42 ausgebildet und in Form geschlossener Ringe 43 um die Mantelfläche 22 des Grundkörpers 40 gewickelt. Die Streifen 42 bzw. Ringe 43 sind beabstandet voneinander angeordnet, sie bedecken demzufolge die Mantelfläche 22 des Grundkörpers 40 nur teilweise, nämlich zu etwa 50 %. Die Oberfläche der Streifen 42 bzw. der Ringe 43 ist glatt ausgebildet. Sowohl Grundkörper 40 als auch Streifen 42 bestehen aus extrudiertem Kunststoff. Die Herstellung des Füllkörpers 39 erfolgt analog zur Herstellung der Füllkörper 20 bzw. 31. Die Streifen 42 sind wie die Streifen 29 ausgebildet, bestehen also auch aus einer dünnen, glatten Folie aus Kunststoff, die unmittelbar und unlösbar mit dem Grundkörper 40 verbunden ist.
Fig. 4 zeigt einen Füllkörper 44, der aus einem Grundkörper 45 sowie drei oberflächenvergrößernden Elementen 46 besteht. Der Grundkörper 45 ist analog zum Grundkörper 32 gemäß Fig. 2 aufgebaut. Demzufolge werden für den Grundkörper 45 dieselben Bezugsziffern verwendet wie für den Grundkörper 32 gemäß Fig. 2. Die oberflächenvergrößernden Elemente 46 sind wiederum aus Streifen 47 einer Kunststoffolie gebildet und in Form geschlossener Ringe 48 auf der Mantelfläche 33 des Grundkörpers 45 angeordnet, und zwar unmittelbar und unlösbar auf der Außenseite der Mantelfläche 33 befestigt. Die Oberfläche der Streifen 47 ist glatt und undurchlässig ausgebildet, des weiteren sind die Streifen 47 beabstandet voneinander angeordnet. Demzufolge bedecken die Streifen 47 die Mantelfläche 33 des Grundkörpers 45 nur teilweise. Es ist jedoch auch vorstellbar, daß die Streifen 47 die Mantelfläche 33 des Grundkörpers 45 zu 100 %, d. h. vollständig, bedecken.

Fig. 5 zeigt einen Füllkörper 49 mit einem Grundkörper 50 sowie mehreren oberflächenvergrößernden Elementen 51. Der Grundkörper 50 ist analog zum Grundkörper 32 gemäß Fig. 2 ausgebildet, daher werden für den Grundkörper 50 dieselben Bezugsziffern verwendet wie für den Grundkörper 32 gemäß Fig. 2. Die streifenförmigen Elemente 51 sind derart auf der Mantelfläche 33 des Grundkörpers 50 angeordnet, daß sie sich in Richtung einer Längsmittelachse 52 des Grundkörpers 50 erstrecken. Die Oberfläche der aus streifenförmiger Kunststoffolie gebildeten Elemente 51 ist glatt und undurchlässig ausgebildet. Des weiteren sind die Elemente 51 beabstandet voneinander angeordnet.

Nach einem weiteren Ausführungsbeispiel der Erfindung (Fig. 6) sind auf einem Grundkörper 53 eines Füllkörpers 54 mehrere oberflächenvergrößernde Elemente 55, 56 angeordnet. Der Grundkörper 53 ist analog zum Grundkörper 21 gemäß Fig. 1 ausgebildet. Demzufolge werden für diesen dieselben Bezugsziffern verwendet. Die Elemente 55, 56 sind auf der Mantelfläche 22 des Grundkörpers 53 spiralförmig angeordnet und hiermit unmittelbar fest verbunden. Die Elemente 55 sind dabei in einer gegensinnigen Orientierung um die Mantelfläche 22 gewickelt wie die Elemente 56. Die Elemente 55, 56 bilden demzufolge eine netzartige Struktur. Wie in Fig. 6 ersichtlich, verfügen die Elemente 55 über eine geringere Breite als die Elemente 56. Die Oberflächen der aus Streifen einer dünnen Kunststoffolie gebildeten Elemente 55, 56 sind glatt und undurchlässig ausgebildet.

Fig. 7 zeigt einen Füllkörper 57 mit einem rohrförmigen Grundkörper 58. Der Grundkörper 58 ist analog zum Grundkörper 21 gemäß Fig. 1 ausgebildet. Daher werden für diesen dieselben Bezugsziffern verwendet. Auf der Mantelfläche 22 des Grundkörpers 58 sind mehrere oberflächenvergrößernde Elemente 59, 60 angeordnet. Die streifenförmig ausgebildeten Elemente 59, 60 verlaufen rechtwinklig zueinander und bilden eine netzförmige Struktur. Die oberflächenvergrößernden Elemente 59, 60 sind derart auf der Mantelfläche 22 angeordnet, daß die Elemente 59 in Richtung einer Längsmittelachse 61 des Grundkörpers 58 verlaufen, die Elemente 60 hingegen ringförmig um die Mantelfläche 22 gewickelt sind. Die Oberflächen der aus Kunststoffolienstreifen gebildeten Elemente 59, 60 sind glatt und undurchlässig ausgebildet.

Ein weiteres Ausführungsbeispiel eines erfindungsgemäßen Füllkörpers 61 zeigt Fig. 8. Der Füllkörper 61 besteht ebenfalls aus einem Grundkörper 62 sowie aus auf den Grundkörper 62 aufgebrachten oberflächenvergrößernden Elementen 63. Der Grundkörper 62 ist analog zum Grundkörper 32 gemäß Fig. 2 ausgebildet. Daher werden für diesen dieselben Bezugsziffern verwendet. Die oberflächenvergrößernden, streifenförmigen Elemente 63 sind derart auf der Mantelfläche 33 des Grundkörpers 62 angeordnet, daß sich dieselben in Richtung einer Längsmittelachse 64 des Grundkörpers 62 erstrecken. Die Oberfläche der streifenförmigen, oberflächenvergrößernden Elemente 63 ist nicht glatt ausgebildet, sondern strukturiert. Hierzu verfügt die Oberfläche der Elemente 63 über Distanzglieder 65. Die Distanzglieder 65 stehen senkrecht von der Oberfläche der Elemente 63 ab. Des weiteren bilden die Distanzglieder 65 eines Elements 63 Reihen 66. Die Distanzglieder 65 einer Reihe 66 sind zueinander äquidistant angeordnet. Grundkörper 62, Elemente 63 sowie Distanzglieder 65 bestehen aus extrudierbarem Kunststoff.

Über die in den Fig. 1 bis 8 gezeigten Ausführungsbeispiel von Füllkörpern hinaus sind beliebige Kombinationen von Grundkörpern und Elementen mit und ohne Distanzglieder denkbar. So können die Elemente mit bzw. ohne Distanzglieder einfache oder mehrfache Spiralwicklungen, einfache oder mehrfache Kreuzwicklungen sowie in Längsrichtung sowie senkrecht zur Längsrichtung verlaufende Strukturen bilden. Des weiteren können die Mantelflächen der Grundkörper bis zu 100 % mit den oberflächenvergrößernden Elementen geschlossen werden. Ebenso ist es denkbar, daß die Grundkörper einen vieleckigen Querschnitt aufweisen.

Fig. 9 bis 11 zeigen Füllkörperblöcke 66, 67 und 68 für beispielsweise getauchte Festbetten.

Der Füllkörperblock 66 gemäß Fig. 9 besteht aus einer Vielzahl gleicher Füllkörper 20 gemäß Fig. 1. Zur Bildung des Füllkörperblocks 66 sind die Füllkörper 20 gemäß Fig. 1 miteinander verschweißt, vorzugsweise an Stirnseiten 69 derselben durch Spiegelschweißen. Die aus einer Kunststoffolie gebildeten Streifen 29 benachbarter Füllkörper 20 sind nicht miteinander verbunden, berühren sich also nur. Vorzugsweise sind benachbarte Füllkörper 20 mit einer andersgerichteten, insbesondere gegensinnigen Wendelung der Streifen 29 versehen.Dadurch berühren sich ie Streifen 29 benachbarter Füllkörper 20 nur bereichsweise, nämlich an den Kreuzungsstellen der Streifen 29 zweier verschiedener, benachbarter Füllkörper 20. Die Füllkörper 20 sind hierbei unter Bildung von Längsreihen 70 und Querreihen 71 in Form einer Matrix 72 angeordnet.

Nach einem weiteren Ausführungsbeispiel der Erfindung besteht der Füllkörperblock 67 aus einer Vielzahl von Füllkörpern 49 gemäß Fig. 5, die miteinander verschweißt sind (Fig. 10). Auch die Füllkörper 49 sind unter Bildung von Längsreihen 70 und Querreihen 71 in Form einer Matrix 72 angeordnet.

Fig. 11 zeigt eine weitere Ausführungsform eines Füllkörperblocks 68. Der Füllkörperblock 68 besteht aus einer Vielzahl von in Längsreihen 70 und Querreihen 71 angeordneten und miteinander verschweißten Füllkörpern 73. Auf einer Mantelfläche 74 des Füllkörpers 73 sind mehrere, oberflächenvergrößernde Elemente 75 angeordnet, und zwar in Form einer mehrfachen Kreuzwicklung. Die Elemente 75 verfügen über Distanzhalter 76. Dadurch wird stets ein definierter Abstand zwischen den Füllkörpern 73 des Füllkörperpakets 68 erreicht. Ein Verkleben der den biologischen Rasen tragenden Mantelflächen 74 der Füllkörper 73 wird dadurch vermieden.

Es ist denkbar, die Füllkörper ganz oder teilweise aus einem anderen Material als Kunststoff herzustellen. So können beispielsweise die Grundkörper aus mtallischen Werkstoffen bestehen und/oder die oberflächenvergrößernden Elemente aus einer Metall- oder Aluminiumfolie gebildet sein.

## Patentansprüche

1. Füllmaterial, insbesondere zur biologischen Abwasserreinigung, mit mindestens einem rohrförmigen Grundkörper mit einer netzartig strukturierten Mantelfläche, **dadurch gekennzeichnet**, daß außen auf der Mantelfläche (22, 33, 74) des Grundkörpers (21, 32, 40, 45, 50, 53, 58, 62) mindestens ein streifenförmig ausgebildetes oberflächenvergrößerndes Element (28, 38, 41, 46, 51, 55, 56, 59, 60, 63, 75) angeordnet ist.

2. Füllmaterial nach Anspruch 1, **dadurch gekennzeichnet**, daß das oder jedes Element (28, 38, 41, 46, 51, 55, 56, 59, 60, 63, 75) als eine streifenförmige Folie ausgebildet ist.

3. Füllmaterial nach Anspruch 1 oder 2, **dadurch gekennzeichnet**, daß das oder jedes Element (28, 38, 55, 56, 75) spiralförmig und/oder ringförmig auf der Mantelfläche (22, 33, 74) angeordnet ist, insbesondere um den Grundkörper (21, 32, 53) herumgewickelt ist.

4. Füllmaterial nach Anspruch 1 oder 2, **dadurch gekennzeichnet**, daß das oder jedes Element (51, 59, 63) derart auf der Mantelfläche (22, 33) angeordnet ist, daß sich dieselben in Richtung einer Längsmittelachse (52, 66) des Grundkörpers (50, 58, 62) erstrecken.

5. Füllmaterial nach einem der vorhergehenden Ansprüche, **dadurch gekennzeichnet**, daß das oder jedes Element (28, 38, 41, 46, 51, 55, 56, 59, 60, 63, 75) mit dem Grundkörper (21, 32, 40, 45, 50, 53, 58, 62) verbunden ist, insbesondere unlösbar.

6. Füllmaterial nach einem der vorhergehenden Ansprüche, **dadurch gekennzeichnet**, daß das oder jedes Element (28, 38, 41, 46, 51, 55, 56, 59, 60, 63, 75) mit dem Grundkörper (21, 32, 40, 45, 50, 53, 58, 62) unmittelbar, insbesondere thermisch verbunden ist.

7. Füllmaterial nach einem der vorhergehenden Ansprüche, **dadurch gekennzeichnet**, daß das oder jedes Element (28, 38, 41, 46, 51, 55, 56, 59, 60, 63, 75) derart auf der Mantelfläche (22, 33, 74) angeordnet ist, daß dieselbe teilweise, vorzugsweise zu 20% bis 80%, insbesondere zu etwa 50%, überdeckt ist.

8. Füllmaterial nach einem der vorhergehenden Ansprüche, **dadurch gekennzeichnet**, daß die Oberfläche des oder jedes Elements (28, 38, 41, 46, 51, 55, 56, 59, 60) undurchlässig und/oder glatt ausgebildet ist.

## Claims

1. Filler material, in particular for biological waste-water cleaning, having at least one tubular base body with a circumferential surface which has a mesh-like structure, characterized in that at least one element (28, 38, 41, 46, 51, 55, 56, 59, 60, 63, 75) which is of strip-like design and increases the surface area is arranged on the outside of the circumferential surface (22, 33, 74) of the base body (21, 32, 40, 45, 50, 53, 58, 62).

2. Filler material according to Claim 1, characterized in that the or each element (28, 38, 41, 46, 51, 55, 56, 59, 60, 63, 75) is designed as a strip-like film or foil.

3. Filler material according to Claim 1 or 2, characterized in that the or each element (28, 38, 55, 56, 75) is arranged in the form of a spiral and/or ring on the circumferential surface (22, 33, 74), in particular is wound around the base body (21, 32, 53).

4. Filler material according to Claim 1 or 2, characterized in that the or each element (51, 59, 63) is arranged on the circumferential surface (22, 33) in such a manner that they extend in the direction of a longitudinal centre axis (52, 66) of the base body (50, 58, 62).

5. Filler material according to one of the preceding claims, characterized in that the or each element (28, 38, 41, 46, 51, 55, 56, 59, 60, 63, 75) is joined, in particular unreleasably, to the base body (21, 32, 40, 45, 50, 53, 58, 62).

6. Filler material according to one of the preceding claims, characterized in that the or each element (28, 38, 41, 46, 51, 55, 56, 59, 60, 63, 75) is joined directly, in particular by thermal means, to the base body (21, 32, 40, 45, 50, 53, 58, 62).

7. Filler material according to one of the preceding claims, characterized in that the or each element (28, 38, 41, 46, 51, 55, 56, 59, 60, 63, 75) is arranged on the circumferential surface (22, 33, 74) in such a manner that part, preferably 20% to 80%, in particular approximately 50%, of the circumferential surface is covered.

8. Filler material according to one of the preceding claims, characterized in that the surface of the or each element (28, 38, 41, 46, 51, 55, 56, 59, 60) is of impermeable and/or smooth design.

## Revendications

1. Matériau de remplissage en particulier pour l'épuration biologique des eaux usées, comportant au moins un corps de base de forme tubulaire, doté d'une surface d'enveloppe structurée en forme de filet, caractérisé en ce qu'au moins un élément (28, 38, 41, 46, 51, 55, 56, 59, 60, 63, 75) d'augmentation de la surface, configuré en forme de ruban, est disposé à l'extérieur sur la surface d'enveloppe (22, 33, 74) du corps de base (21, 32, 40, 45, 50, 53, 58, 62).

2. Matériau de remplissage selon la revendication 1, caractérisé en ce que le ou chaque élément (28, 38, 41, 46, 51, 55, 56, 59, 60, 63, 75) présente la forme d'une feuille en forme de ruban.

3. Matériau de remplissage selon les revendications 1 ou 2, caractérisé en ce que le ou chaque élément (28, 38, 55, 56, 75) est disposé en forme de spirale et/ou en forme d'anneau sur la surface d'enveloppe (22, 33, 74), et en particulier est enroulé autour du corps de base (21, 32, 53).

4. Matériau de remplissage selon les revendications 1 ou 2, caractérisé en ce que le ou chaque élément (51, 59, 63) est disposé sur la surface d'enveloppe (22, 33) de manière à s'étendre dans la direction d'un axe longitudinal central (52, 66) du corps de base (50, 58, 62).

5. Matériau de remplissage selon l'une des revendications précédentes, caractérisé en ce que le ou chaque élément (28, 38, 41, 46, 51, 55, 56, 59, 60, 63, 75) est relié au corps de base (21, 32, 40, 45, 50, 53, 58, 62), et notamment de manière non libérable.

6. Matériau de remplissage selon l'une des revendications précédentes, caractérisé en ce que le ou chaque élément (28, 38, 41, 46, 51, 55, 56, 59, 60, 63, 75) est relié directement au corps de base (21, 32, 40, 45, 50, 53, 58, 62), et en particulier thermiquement.

7. Matériau de remplissage selon l'une des revendications précédentes, caractérisé en ce que le ou chaque élément (28, 38, 41, 46, 51, 55, 56, 59, 60, 63, 75) est disposé sur la surface d'enveloppe (22, 33, 74) de telle sorte que cette surface d'enveloppe soit recouverte en partie, de préférence sur 20% à 80%, et notamment sur environ 50%.

8. Matériau de remplissage selon l'une des revendications précédentes, caractérisé en ce que la surface du ou de chaque élément (28, 38, 41, 46, 51, 55, 56, 59, 60) est imperméable et/ou lisse.
